# EUROPEAN PATENT SPECIFICATION

(11) **EP 4 136 807 B1**
(45) Date of publication and mention of the grant of the patent: **04.03.2026**
(21) Application number: 21716748.5
(22) Date of filing: 08.04.2021
(51) Int. Cl.: H04L 12/28, H04L 12/12

(54) **NETWORK NODE FOR OPERATION UNDER NON-AVAILABILITY OF APPLICATION CONTROL HUB**
NETZWERKKNOTEN FÜR DEN BETRIEB BEI NICHTVERFÜGBARKEIT DER ANWENDUNGSSTEUERUNGSZENTRALE
N UD DE RÉSEAU POUR UN FONCTIONNEMENT EN CAS DE NON-DISPONIBILITÉ DU CONCENTRATEUR DE CONTRÔLE DES APPLICATIONS

(30) Priority: 17.04.2020 US 202063011489 P; 24.04.2020 EP 20171225
(43) Date of publication of application: 22.02.2023
(73) Proprietor: Signify Holding B.V., 5656 AE Eindhoven (NL)
(72) Inventor: ROZENDAAL, Leendert, Teunis, 5656 AE Eindhoven (NL); DEIXLER, Peter, 5656 AE Eindhoven (NL); ERDMANN, Bozena, 5656 AE Eindhoven (NL)
(74) Representative: Verweij, Petronella Daniëlle
(86) International application number: PCT/EP2021/059171
(87) International publication number: WO 2021/209307

(56) References cited:
- US-A1- 2006 193 292
- US-A1- 2010 100 627
- US-A1- 2017 195 131
- US-A1- 2020 092 929

## Description

### FIELD OF THE INVENTION

The present invention is directed to a network node, to a wireless communication network, to a method for operating a network node and a wireless communication network and to a computer program.

### BACKGROUND OF THE INVENTION

WO 2016/020472 A1 describes a control device that comprises one or more transmitters configured to transmit control signals for controlling operation of a controllable device through at least a first communication path between the control device and the controllable device. The first communication path comprises a first network. The transmitter is also configured to transmit control signals for controlling operation of a controllable device through at least a second communication path between the control device and the controllable device. The second communication path comprises a second network. A determination logic determines whether there exists an error in the first communication path. The control device switches from transmitting control signals through the first communication path to transmitting said control signals through the second communication path in response to a determination by the determination logic that there exists an error in the first communication path.

US 2010/100627 A1 discloses a system and method for bypassing an access point in a wireless Local Area Network (LAN) for direct point-to-point data transfers are provided, the system comprising a user device equipped with a primary local wireless interface establishing a wireless communication link with an access point of the wireless LAN, a secondary local wireless interface used for direct point-to-point (P2P) file transfers, and a P2P file transfer application. When the P2P application desires to transfer a data file to another user device within the wireless LAN, the user device determines whether the other user device is within a coverage area of the secondary local wireless interface and whether the file transfer meets one or more alternate transfer criterion. If so, the data file is transferred to the other user device via a direct P2P wireless communication link, thereby bypassing the access point of the wireless LAN.

### SUMMARY OF THE INVENTION

In some wireless communication networks, the network nodes operate in a centralized manner for performing a predetermined application function, where an application control hub acts as a control device for centralized control of data exchange pertaining to said application function, typically providing messages and/or instructions received from the nodes of the wireless communication network to the one or more nodes of the network intended for reception of the messages and/or instruction.

It would be beneficial to provide a network node capable of operating within a same wireless communication network with other network nodes even in the case of a non-availability of said application control hub.

The invention is set out in the appended set of claims. More particularly, the goal of this invention is achieved by a network node as claimed in claim 1, by a wireless communication network as claimed in claim 9, and by a method for operating a network node as claimed in claim 12.

According to a first aspect of the present invention, a network node for communicating in a wireless communication network is described. The network node of the first aspect comprises an application unit that is configured to perform one or more predetermined application functions and configured to generate and provide application-specific wireless communication signals for reception within the wireless communication network. The network node also comprises an input interface that is configured to receive respective availability signals. The availability signals are indicative of an availability or non-availability of one or more application control hubs for centralized control of data exchange within the wireless communication network with respect to the respective predetermined application function. The network node further comprises an operation-control unit that is connected to the input interface and configured to switch operation of the application unit from a centralized-operation mode to a distributed operation mode with respect to the respective predetermined application function upon determining that the availability signal is indicative of the non-availability of the respective application control hub.

The application unit of the network node of the first aspect of the present invention is configured, in the centralized-operation mode with respect to the respective predetermined application function, to generate first application-specific wireless communication signals for communicating via the respective application control hub.

In addition, the application unit of the network node is configured, in the distributed-operation mode with respect to the respective predetermined application function, to generate second application-specific communication signals for directly communicating with at least one target network node within the wireless communication network and to send them directly to one or more of the at least one target network nodes.

The network node thus belongs to a wireless communication network and is configured to perform one or more application functions, each associated to a respective application control hub. The application control hub is a network node that is configured to control, in a centralized manner, data exchange that pertains to the respective application function. In the centralized-operation mode, i.e. when the respective application control hub is available, according to the information provided by the availability signal, the communication between the network node and other nodes of the wireless communication network is performed via the respective application control hub, which is configured to receive the first application-specific wireless communication signals from the network node and, in case it is intended or necessary, to forward them to a target network node or to control one or more target network nodes in dependence on the received first application-specific wireless communication signals, in accordance with a predetermined algorithm or engine rule.

Further, the network node of the first aspect is advantageously configured to operate with respect to the respective application function, in another operation mode, referred to as distributed-operation mode. The application unit is switched to the distributed-operation mode, upon determining that the application control hub is not-available, as inferred from the respective availability signal. In this distributed-operation mode, the application unit is configured to generate and provide second application-specific communication signals, that are not necessarily wireless communication signals, for communicating with at least one target network node. The second application-specific wireless communication signals are sent directly to one or more of the at least one target network node. Thus, instead of trying to communicate with the currently non-available application control hub, which does not lead to the desired functionality and may possibly result in an increased network traffic, the application unit of the network node is switched to the distributed-operation mode, which bridges the application control hub and allows for a given functionality even when the application control hub is not available.

In the following, embodiments of the first aspect of the present invention will be presented.

In an embodiment, the network node comprises an application unit configured to perform one application function, such as a lighting function, an HVAC function, a presence sensing function, a security monitoring function or any other suitable application functions in cooperation and communication with the remaining network nodes of the wireless communication network. In this embodiment, the application control hub that controls the data exchange for within the wireless communication network is referred to as network-control node. In another embodiment, the application unit is configured to perform a plurality of application functions such as any combination of the functions stated above, and which require a respective application control hub for centralized control of data exchange pertaining to the different application functions. In an embodiment, an application control hub is configured to control data exchange pertaining to more than one application function. When the availability signals indicate that there is a first set of one or more application control hubs that are available and a second set of one or more application control hubs that are not-available, the network node is advantageously configured to simultaneously operate the application unit in the centralized-operation mode with respect to one or more application functions controlled by the application control hubs of the first set and to operate the application unit in the distributed-operation mode with respect to one or more other application functions controlled by the application control hubs of the second set.

The application control hub is, in different embodiments, a router, an access point, a bridge, a gateway, a peripheral gateway or any other suitable network node suitable of controlling data exchange pertaining to a given application function between the network nodes or between a network node and the application control hub. In an embodiment, the application control hubs are configured to further control exchange or provision of actuation signals, or operation instructions for controlling operation of one or more network nodes of the wireless communication network in dependence on the received first application-specific wireless communication signals. An exemplary application control hub is configured to convey an actuation signal or an operation instruction provided by the first application-specific wireless communication signals. Additionally, or alternatively another exemplary application control hub is configured to generate and provide an actuation signal or an operation instruction based on a received first application-specific wireless communication signals in accordance with a predetermined algorithm. For instance, a first application-specific wireless communication signals indicative of an on-button having been pressed results in the generation and provision of an operation instruction directed to turning on a given functional unit of a network node, such as a lighting unit, a ventilation unit, or other alternative units known per se.

In a particular embodiment, more than one application control hub is configured to control, in a centralized manner, data exchange, possibly also including actuation signals or operation instructions, with respect to a given application function. In this embodiment, the distributed-operation mode is switched upon determining that the availability signal is indicative of the non-availability of those application control hubs in controlling data exchange with respect to the given application function.

In another embodiment, each of the application control hubs controlling data exchange with respect to the same application function are associated to a respective subset of network nodes. If one of the application control hubs is currently unavailable as indicated by the availability signal, the network nodes of the subset associated to the unavailable application control hub are configured to communicate with one of the remaining application control hubs that are still available for that application function.

For instance, in a wireless communication network expanding over a relatively large distance, two or more application control hubs are configured to control an application function that includes gathering information from the network nodes. Each application control hub is positioned to serve a subset of network nodes, in particular those network nodes that are located closest to the application control hub. The network traffic from each subset of network nodes mainly remains in one part of the wireless communication network, whereas network traffic from another subset of network nodes remains in another part of the wireless communication network. Messages from both subsets of network nodes can be sent simultaneously thus increasing the overall network capacity, compared to situation where a single application control hub is available. If one application control hub becomes unavailable, the remaining application control hub can still serve the entire wireless communication network, although maybe at a lower rate.

Similarly, in another example, two or more application control hubs are associated to a software update function of the network nodes of the wireless communication. Each of the application control hubs serves a subset of network nodes, typically depending on the position at which they are installed, and the software update function can be performed simultaneously using the two or more application control hubs at the same time. If one or more application control hubs become unavailable again, an available application control hub can still serve the network nodes originally served by the unavailable application control hub, albeit in some cases at lower overall performance.

In these embodiments, the non-availability of an application control hub does not cause a switch from the centralized operation mode to the distributed operation mode since there is at least another available application control hub the controls the data exchange with respect to the same application function as the non-available application control hub.

In a preferred embodiment, the distributed-operation mode is advantageously configured to perform a so-called graceful degradation operation mode with respect to the respective application function. The graceful degradation operation mode is switched on when a given availability signal indicates that the respective application control hub, which is configured to handle communication between the network nodes of the wireless communication network, is not available for any given reason. This guarantees that certain functionality, typically restricted or reduced when compared to that functionality of the application function that is enabled during operation in the centralized-operation mode, is still available even in the absence of the application control hub. In this sense, the application control hub is said to be non-available when it is disconnected from the wireless communication network or otherwise currently or expectedly not capable of communicating with other devices or nodes of the wireless communication network.

In an embodiment, the operation control unit is further configured, when the application unit is operated in the distributed-operation mode with respect to the predetermined application function, to switch operation of the application unit from the distributed operation mode to the centralized-operation mode upon determining that the availability signal is indicative of the availability of the respective application control hub. In this preferred embodiment, the operation mode with respect to the respective predetermined application function of the application unit is switchable from the centralized-operation mode to the distributed-operation mode and vice-versa, i.e., from the distributed-operation mode to the centralized-operation mode, both in dependence on the respective availability signals.

In another embodiment, which can also include any of the features described above, the network node further comprises an application control hub detection unit that is configured to ascertain the availability or the non-availability of the one or more application control hubs within the wireless communication network and to provide the respective availability signal to the input interface. In a particular embodiment, the application control hub detection unit is advantageously configured to monitor wireless communication signals directed to the target network node in the centralized-operation mode and to assume that the application control hub is no longer available upon determining that expected wireless communication signals have not been provided to the target network node by the application control hub. For instance, and as a non-limiting example, the network node is a device, such as a switch or a sensor, for controlling operation of a target network node such as a wirelessly controllable luminaire. The application function is in this exemplary case a lighting-control function in which the application control hub, when available, controls the data exchange between the network nodes. In this example, the network node, in the centralized operation mode, generates and sends the first application-specific wireless communication signals to the application control hub, which then provides wireless operation signals comprising instructions for controlling the luminaire based on the received first application-specific wireless communication signals. The application control hub detection unit of this particular embodiment is configured to detect whether the wireless operation signals have been transmitted and to provide the availability signal indicative of a non-availability of the application control hub upon detecting that the wireless operation signals have not been transmitted within a predetermined time span. The reception of the availability signal indicative of a non-availability of the application control hub causes a change in the operation mode of the network node, which is switched to the distributed-operation mode with respect to the lighting-control function. When operated in this distributed-operation mode, the network node is advantageously configured to generate the second application-specific communication signals and to provide them directly to one or more of the at least one target network node. The payload content of the first and the second communication signals does not necessarily have to be the same. In the first case, it comprises for instance state information regarding a current state of the switch or the sensor which is then transformed into instructions for controlling the target network node by the application control hub, for example in accordance with a predetermined algorithm or engine rule. In the second case, it comprises for instance instructions for directly controlling the target network node. Alternatively, the second communication signals comprise the state information and the target network node is suitably configured to interpret the received state information and to control its operation based thereon. Alternatively or additionally, the application control hub of a particular embodiment is configured to detect a presence-announcement signal provided by the application control hub and being indicative of an availability of a previously non-available application control hub and to provide the respective availability signal in dependence on the reception of the presence-announcement signal. This causes a switch of the operation of the operation control unit from the distributed to the centralized operation mode. In another embodiment, the network node having the application control hub detection unit is further configured to provide the respective availability signal to the input interface of other network nodes of the wireless communication network.

In an embodiment, the application control hub detection unit comprises a network-monitoring unit configured to monitor wireless communication signals within the wireless communication network and to ascertain the availability or the non-availability of the application control hub using the monitored wireless communication signals.

For instance, in an embodiment, the network monitoring unit is configured, for ascertaining the non-availability of the application control hub, to detect certain anomalies in network traffic, that are associated to a missing application control hub. A non-limiting list of such anomalies include:
(i) detection of missing regular messages from the application control hub, which, even if are not directed to the network-node, can be monitored in a so-called "promiscuous mode". In a particular embodiment, these regular messages include, light state polling in a Hue system and/or MTO route requests from the bridge acting as application control hub in the Hue system and/or acknowledgements or responses from the application control hub, for instance at MAC, ZDO, APS or ZCL level, and/or dedicated keep-alive messages from the application control hub, or any combination thereof;
(ii) detection of a number of route requests or other discovery messages for the application control hub exceeding a predetermined threshold amount. For example, in a wireless communication network using Zigbee as a wireless communication protocol, the discovery messages include IEEE_addr_req/ NWK_addr_req. Even on a stable wireless communication network, some of these messages may occur, e.g. due to changes in propagation conditions, or interference, resulting in multiple link statuses getting lost. Therefore, the predetermined threshold amount is suitably selected taking into account the amount of such messages exchanged when the application control hub is available and the network node is operated in the centralized-operation mode with respect to the given application function;
(iii) detection of a so-called "last breath" message from the application control hub, the "last breath" message being indicative of an expected non-availability of the application control hub;
(iv) detection of missing Link Status messages from the application control hub by network nodes within one-hop reach of the application control hub. The network nodes one hop away from the application control hub are suitably configured to detect a disappearance of the application control hub from the Link Status messages of other nodes of the wireless communication network. Alternatively, or additionally, nodes within reach of the application control hub are suitably configured to inform the network node that the application control hub is not available;
(v) out of band detection of certain events by other nodes of the wireless communication network or of other wireless communication networks. For example, nodes of a non-lighting system, such as a security camera, detecting presence of a subject and also detecting that lights associated to the area where the presence is being detected do not switch on as expected. The security camera is configured to ping the network node, for example via BLE or other alternative wireless communication protocol to compare notes/enquire the reason for the unexpected behavior. This ping is used as the availability signal indicative of the non-availability of the application control hub; and
(vi) detection of other missing other signals sent by the application control hub, such as Wi-Fi, e.g. in case of a permanent bridge/hub type of application control hub, or Bluetooth signals, in case of smartphone temporary application control hub.
(vii) detection of a number of identical or related first application-specific wireless communication signals exceeding a predetermined threshold amount within a given time span. For instance, in a lighting arrangement, a user actuates a button to turn on or off a given luminaire. If the application control hub is not available the luminaire does not react as the user wishes, and he or she will probably actuate the button again, which causes the generation and provision of identical or related first application-specific wireless communication signals within a relatively short time span. The detection of these identical (e.g. indicative of an instruction to turn on or off a luminaire) or related (e.g. indication of consecutive instructions to turn on and off a luminaire) first wireless communication is signals is used as the availability signal.

The network-monitoring unit, in a particular embodiment, is further configured to provide the availability signal further in dependence on a determined current duration of the non-availability of the application control hub. For instance, in a particular embodiment, if the application control hub is not-available for less than a first time span, e.g. 60 seconds, equivalent to missing 3 consecutive Link Status messages, or other first time span duration, no corrective action may be required and the application unit may keep operating in the centralized-operation mode and not switch to the distributed-operation mode with respect to the respective application function. If, however, the application control hub is not available for a second time span beginning after the end of the first time span, e.g. 1-60 minutes, the availability signal indicative of the non-availability of the application control hub system is provided to the input interface and the network node is operated in the distributed-operation mode with respect to said application function. Optionally, if the application control hub has been continuously unavailable for a predetermined time span equal to the sum of the first and the second time span, the nodes of the wireless communication networks are instructed to adopt a predetermined state. For example, in case of a lighting arrangement, the lighting nodes are instructed to turn on for maximum user safety. The duration of the first and second time spans, and the behavior in each of those modes are be programmable and thus adaptable to the given wireless communication network. For instance, if a full software update cycle or a reboot cycle of the application control hub takes a certain time, the duration of the first time span is advantageously set to fit that certain time.

In an embodiment, the application control hub detection unit is further configured to ascertain an expected-disconnection time span of the application control hub from the wireless communication network and to provide a disconnection-time signal indicative thereof. Further, the operation-control unit is further configured to receive the disconnection-time signal and to switch operation of the application unit with respect to the respective application function from the centralized-operation mode to the distributed operation mode further upon determining that the expected-disconnection time span is longer than a predetermined threshold time-span amount.

Advantageously, the network node further comprises a storage unit for storing routing-data indicative of available communication routes within the wireless communication network which comprise one or more control-node entries pertaining to communication routes between the network node and the application control hub. In this particular embodiment, the transmitter unit is connected to the storage unit and configured to provide the first wireless communication signals in dependence on the routing-data and the operation control unit configured, in the distributed-operation mode to disable access of the transmitter unit to the control-node entries for a predetermined time span. The selection of the duration of the predetermined time span enables either a temporary or a complete disablement of access to the control-node entries. In an embodiment, control-node entries entered at a later point in time can be however accessed, so the complete disablement is equivalent to a removal of the control-node entries from the routing data. This routing-data includes, in an embodiment, one or more of the following: bindings, routing table entries, neighbor table entries, address map entries, etc., or any combination thereof.

Beneficially, the network node further comprises a storage unit for storing network-data. The network-data is indicative of the network nodes of the wireless communication network and comprise one or more application control hub entries pertaining to the respective application controls. The application unit is connected to the storage unit and configured to provide the first application-specific wireless communication signals in dependence on the network-data. The operation control unit is configured, when the application unit is operated in the distributed-operation mode with respect to the respective application function, to disable access of the application unit to the control-node entries for a predetermined time span.

In a particular embodiment, the storage unit is configured to store network-data in the form of routing-data indicative of available communication routes between network nodes within the wireless communication network. The routing-data comprises one or more application control hub entries pertaining to communication routes between the network node and the application control hub. The application unit is connected to the storage unit and configured to provide the first application-specific wireless communication signals in dependence on the routing-data. The operation control unit is configured, when the application unit is operated in the distributed-operation mode with respect to the respective application function, to disable access of the application unit to the control-node entries for the predetermined time span.

The selection of the duration of the predetermined time span enables either a temporary or a complete disablement of access to the application control hub entries. In an embodiment, application control hub entries entered and stored at a later point in time can be however accessed, so the complete disablement is equivalent to a removal of the existing prior application control hub entries from the network-data or from the routing-data. The network-data or the routing-data include, in an embodiment, one or more of the following: bindings, routing table entries, neighbor table entries, address map entries, etc., or any combination thereof.

A removal of the application control hub entries is especially advantageous in cases where the application control hub is configured as a commissioning node or a update node that is not involved in common operation of the wireless communication network, but rather mainly used for performing an initial set-up procedure of the wireless communication network or to update existing firmware or software of the network nodes. Removing the application control hub entries from the network-data or the routing-data thus allows to free resources occupied by said entries. On the other hand, temporarily disabling the access to the application control hub entries, is especially advantageous in cases where the application control hub is expected to be temporarily unavailable, e.g. during maintenance. In addition, this is advantageous in cases where the application control hub is intermittently available and unavailable but, when available, requires immediate control of the wireless communication network. A non-limiting example thereof is a user's smartphone as an application control hub that includes a lighting control app for lighting control application for controlling lighting nodes in a home setting. Similarly, as another example, a forklift in a warehouse features an application-control hub for a lighting control function that controls one or more standalone lighting networks for each isle. The forklift is for instance configured to fuse sensor data from its onboard sensors to decide on the lighting setting of the luminaires to warn workers of the approaching forklift and its intent.

Further, in an embodiment, temporarily disabling the access to the application control hub entries is performed by blocking, stubbing or queuing the outgoing traffic to the application control hub's address until it is again available, according to the availability signal. Since the traffic to the application control hub may be generated by multiple layers (ZCL, e.g. reporting light status, ZDO, e.g. performing re-discovery, APS, e.g. requesting key update and NWK, e.g. starting a route discovery), care must be taken that all of the above traffic gets blocked and no side effects such as for example missing ACK or response messages, lead to discovery storms. Alternatively, or in addition, an embodiment further comprises a storage unit for storing the "temporary disabled" status of the different entries, so that the communication immediately gets dropped at a layer managing the table, e.g. APS for the binding table, NWK for the neighbor and routing table. A particular application control hub is advantageously configured to communicate its availability/non-availability to trigger the resetting or setting of this status. Alternatively, an application control hub is configured to piggyback it on regular messages it sends, if any, e.g. in the form of type-length-value parameters appended to a command. For example, the MTORR (many-to-one route request), likely to be periodically sent by the application control hub, is used to transport the type length value (TLV) with the instruction to enable/disable the entries. Alternatively, the TLV is be added to a "keep-alive" message that is periodically broadcasted. This particular alternative requires the application control hub to send the message disabling the entries shortly before disappearing from the network.

Analogously, a particular application control hub is configured to provide the availability signal to indicate its "coming back to" or "will be back in" the wireless communication network. For example, after rebooting, the application control hub first indicates to at least one network node of the wireless communication network that it is currently rejoining the wireless communication network. Additionally, the application control hub may inquire from one or more network nodes information regarding how urgently the application control hub is required. The indication of the coming back to the communication network is in some exemplary application control hubs sent at its discretion, e.g. when only coming back temporarily, as part of software-update booting. Examples of such an indication are the "Device Announce" available in Zigbee, an MTORR or a dedicated command. The indication of the application control hub coming back could have further explicit instructions for the network node. For instance, its reception is used as an instruction to switch to centralized-operation control mode, with respect to the application function involving the given application control hub. Having this as a dedicated option, enabled separately from the communication to the application control hub, allows the application control hub that is temporarily used as a diagnostics maintenance tool to observe, and - if necessary - adapt the distributed-operation mode of the network node; for instance, an iRobot forklift/vacuum cleaner may be used as peripheral gateway to be used to perform together with the Wi-Fi lights computing-intensive high quality RF sensing in a certain area of the building after a possible event such as a water leakage in a home or warehouse has been flagged by the RF sensing solely based on Wi-Fi Lights.

Additionally, in another embodiment of the network node, reception of the indication that the application control hub is rejoining the wireless communication network is used as an instruction for the network node to resume reporting to the application control hub, possibly including any queued messages, for example in an aggregated or a summarized form, from the period when the application control hub was not available. Additionally, or alternatively the reception of the indication that the application control hub is rejoining the wireless communication network it is also used to trigger a removal of settings related to the distributed-operation mode, including for example, bindings and group membership.

In another embodiment, which may include any of the technical features described with respect to any of the previous embodiments, the network node further comprises a receiver unit for receiving wireless communication signals from the application control hub of the wireless communication network and a functional unit connected to the receiver unit and configured to perform a wirelessly controllable node-function. Preferably, the receiver unit forms, together with a transmitter unit for transmitting the wireless communication signals, a transceiver unit for providing and receiving wireless communication signals for communicating with other network nodes of the wireless communication network, including the one or more application control hubs. In this embodiment, the first application-specific wireless communication signals and the second communications signals, both generated by the application unit, comprise respective control-data for controlling the functional unit. In the centralized operation-mode, the first wireless communication signals are provided to the application control hub, which then sends specific instructions back to the receiver unit, which are used to control the node-function. A non-limiting example of such a network node is given by a luminaire having an integrated presence sensor and forming part of a lighting network that uses an IEEE 802.11 or an IEEE 802.15, preferably IEEE 802.15.4 wireless communication protocol. The functional unit is, in this particular example, the lighting unit for illumination. The application unit provides as the first application-specific wireless communication signals to the application control hub, an indication that a person has entered a room, as determined by the integrated presence sensor. The application control hub is aware that the luminaire is currently off and, according to a predetermined algorithm or rule engine, sends a switch-on command to the luminaire, which causes the functional unit, i.e. the lighting unit to switch on. Thus, the switch-on command provided by the application control hub in response to the reception of the first application-specific wireless communication signal is used to control the node-function of the network node, i.e. to control the functional unit of the network node. However, if the application control hub is unavailable, operating in the centralized-operation mode will not result in the luminaire being switched-on upon detecting a person. In this case, the person is still be detected and the first application-specific wireless communication signals are sent to the application control hub. However, the application control hub, being unavailable, cannot send back the necessary signals for controlling the node-function. Therefore, the operation-control node of this embodiment is configured, to switch operation of the application unit to the distributed-operation mode. In this mode, the application unit is configured to provide the second communication signal directly to the functional unit for performing the node-function. In the example of the luminaire with an integrated presence sensor, or any similar examples, the second application-specific communication signal is not a wireless signal but it is provided via an electrical connection and causes the luminaire to switch-on.

In another embodiment, while the application unit is operated in the distributed operation mode, the second application-specific communication signals are sent directly to one or more of the target network nodes as a wireless broadcast or a wireless groupcast signal with a predetermined maximum number of allowed hops. Preferably, the second application-specific communication signals are sent directly to one or more of the target network nodes as a wireless broadcast or a wireless groupcast signal as a single-hop transmission. This is particularly advantageous for network nodes that are controlled by other network nodes operating in its direct vicinity, such as luminaires being controllable by switches or by sensors, which are located within the same room.

In another embodiment, while the application unit is operated in the distributed operation mode, the second application-specific communication signals are sent directly to one or more of the target network nodes as a respective unicast message.

In another embodiment, which may also include any of the technical features described with respect to the previous embodiments, the network node further comprises a user-input interface for receiving a user-input signal. User-input interfaces include, but are not limited to, buttons, switches, slideable or rotatable controllers, touchpads, presence sensors, voice control, motion sensors, etc.

In this embodiment, the application unit is connected to the user-input interface and configured to generate and provide the first application-specific wireless communication signals and the second application-specific communication signals in dependence on the received user-input signals. Thus, the application unit, in the centralized-operation mode with respect to a given application function, is configured to provide the first application-specific wireless communication signals to the application control hub which are indicative of the current state of the user-input interface, e.g. the position of the button, switch or controller or of a state sensed by the sensor. Further, in the distributed-operation mode, the second application-specific communication signals, wireless or wired, are provided directly to the target network node, which, as explained above, is in some embodiments the same network node providing the first and the second application-specific communication signals. The second communication signals are preferably indicative of an instruction for controlling operation of the target network node that depends on the current state of the user-input interface. Alternatively, the second communication signals comprise information pertaining to the current state of the user-input interface which is then interpreted by the target network node, for instance for controlling its functional unit to perform the respective node-function.

In the following, some non-limiting examples of operation in the distributed-operation mode are listed. The distributed-operation mode is triggered when the availability signal is indicative of a non-availability of the application control hub. The following non-limiting examples are given for user-input interfaces in the form of a button for controlling a lighting system but are extrapolatable to other user-input interfaces and other target network nodes as described above:
a) When the user presses "on" or presence is detected, send the "on" event to the entire network, for instance as a Zigbee broadcast message addressed to all network nodes of the wireless communication network. This may cause the on-switching of too many lights, but at least the user is not in the dark. A preferred alternative is to send similar broadcast message, but with a limited hop-count, meaning it will not be rebroadcast in the entire network; the hop count could be e.g. one or two hops. This limits the light effect to the area around the switch or the sensor.
b) When the user presses "off" a predetermined number of times, which is one in a particular embodiment, send the "off" event to the entire network, preferably with a predetermined transition time to allow leaving the area before the lights really are switched off.
c) For better localized control, the application control hub is configured to set the Zigbee group that the user has configured in an app for the programmed behavior in the application control hub into the switch or the sensor. Then the on/off/dim/scene commands are sent directly from the switch to the lights in that group, for example as a groupcast to that particular Zigbee group. Preferably this only happens in the distributed-operation mode acting as a 'graceful degradation' mode since they centralized-operation mode can be richer than what the switch or the sensor can do in the distributed-operation mode, e.g. dynamic scenes, time-of-day depending scenes, different groups for different switches or sensors, etc. In this case, some time is needed for the network node having the switch or the sensor to realize that the application control hub or gateway has disappeared, and thus there is an "idle" time when the user's reactions will not result in any light effect. To address this issue, an embodiment of the network node is configured to monitor light commands towards the group of lights it is supposed to control, as programmed by the bridge. If such commands are expected but not present, it can send the 'graceful degradation' light control messages. This is implemented in an embodiment as a self-learning algorithm for detecting abnormalities on traffic flowing through the system. Preferably, a plurality of network nodes performs distributed abnormality detection where several end-nodes share their observations locally. The end-nodes also notify each other if one of them believes that the application control hub is fully functioning again; this increases the recovery of the system after the application control hub was not available. Alternatively, or additionally, the end-nodes notify each other if one of them believes that the application control hub is currently not available. The fact that the network node needs to monitor the light control messages, might limit the application control hub in its freedom of programming the algorithm or rule engine. In a certain example, the only commands detectable by the network node are groupcast/broadcast commands i.e. unicast commands to the nodes of the wireless communication network cannot be monitored by the switch. Also, if an application control hub chooses not to react to some triggers, because of whatever rule, the network node could potentially trigger some behavior still. To mitigate the risk, a suitable application control hub has the capability of programming explicitly devices and their endpoints/clusters, for which this behavior is enabled. Further, enabling of this behavior could be conditional on the user hitting the same button multiple times or multiple user actions indicative of failure/dissatisfaction. One possible workaround for the "unicast" issue is that the network nodes having the user-input interfaces listen to those messages by using the so-called promiscuous sniffing mode. Alternatively, in case of unicast-only or no reaction at all, the application control hub is configured to send some dummy groupcast messages so the network-node still knows that the application control hub has received the command.
d) The network-node, irrespective of whether the application control hub, e.g. the bridge, is available or not, is configured to send some light control commands and then the application control hub itself, if available, sends another command for fine-tuning. This approach is advantageous in situations where the wireless communication network temporarily suffers from large latency e.g. due to wireless interference, or the application control hub is very slow but still available, or communication to/from the application control hub is delayed but not lost. The nodes of the wireless communication network are advantageously configured to apply abnormality detection mechanism to discern whether to send locally lighting commands.

The programming of the network node as described in step "c" above and the behavior ruleset in the application control hub are preferably defined in a compatible way. This gives the best experience, since there will always be light control in reaction to the user pressing, and, if the application control hub is available, the user will get the optimal experience. For example, a network node sends a command indicating to switch on the lights of its associated lighting devices to a brightness value of 50%, "bri=50%", and a color temperature of 2700K "ct=2700K". The application control hub refines this by sending bri=75% ct=(dynamic value depending on time-of-day) directly afterwards.

Further, upon detection of the non-availability of the application control hub, an embodiment of the network node is configured to limit the complexity of the functions available to the user. E.g., the switch could refrain from sending color control or circadian-rhythm commands and send on/off and dimming commands instead. In another extension, instead of sending relative commands ("increase brightness by 10", "toggle"), the network node is configured to send absolute commands ("on", "go to level 128"), to make sure that the light effects on the target network nodes of the group controlled by the network node comprising the switch or the sensor are all synchronized.

According to a second aspect of the present invention, a wireless communication network is presented. The wireless communication network comprises at least one network node according to the first aspect of the present invention, and at least one application control hub for centralized control of data exchange pertaining to a respective application function. The respective application control hub is configured to receive, from the network nodes, the first application-specific wireless communication signals as incoming wireless communication signals comprising payload indicative of a control-instruction for controlling operation of one or more target network nodes. The application control hub is also configured to provide output wireless communication signals comprising the control-instruction to the one or more target network nodes.

The wireless communication network thus shares the advantages of the network-node of the first aspect of the invention.

Different embodiments of the wireless communication network comprise different embodiments of the network node.

The application control hub is, in different embodiments, a router, an access point, a bridge, a gateway, a peripheral gateway or any other suitable network node suitable of controlling data exchange pertaining to a given application function between the network nodes or between a network node and the application control hub.

In an embodiment of the wireless communication network of the second aspect, the application control hub is configured to provide to the input interface of the at least one network node, a availability signal indicative of an expected non-availability of the application control hub within the wireless communication network. In this embodiment, the operation-control unit of the at least one network node is configured to switch operation of the application unit of the network node from the centralized-operation mode to the distributed operation mode with respect to a respective predetermined application function upon reception of the availability signal indicative of an expected non-availability of the application control hub.

In another embodiment, the at least one network node comprises an operation control unit that is further configured, in the distributed-operation mode, to switch operation of the network node from the distributed operation mode to the centralized-operation mode upon determining that the availability signal is indicative of the availability of the application control hub, and the application control hub, when temporarily disconnected from the wireless communication network is configured to provide to the at least one network node, a availability signal indicative of an expected availability of the application control hub within the wireless communication network. In this embodiment, the operation-control unit is configured to switch operation of the network node from the distributed operation mode to the centralized-operation mode upon reception of the availability signal indicative of an expected availability of the application control hub.

It is beneficial for the application control hub to have the ability to indicate to the network nodes its disappearance or non-availability, including whether this is temporary or permanent, or a speed of movement/direction of the application control hub through the space. A particular application control hub includes the means to send this indication, depending on the type and duration of the intended absence. The indication could further include detailed instructions, in form of parameters or flags, to the network nodes, on how to behave.

An embodiment of the application control hub is preferably configured to instruct the network node to behave according to any of the actions listed below when operating in the distributed operation mode:
- temporarily stop any reporting to the application control hub; this is especially useful in cases of short-term disappearance of the application control hub (seconds or some minutes, e.g. for SW update), since it would prevent the network nodes reporting to the application control hub from detecting the broken connection, thus triggering many unnecessary route requests and thus destabilizing the entire wireless communication network; and/or
- remove any reference the network node had on the application control hub, such as bindings, routing table entries, neighbor table entries, address map entries, etc. This is especially useful in the case the application control hub only performs a role of a commissioning tool and is not involved in daily operation of the communication network; it allows to free the resources occupied by the application control hub related entries; or
- temporarily disable any reference the device had on the application control hub, such as bindings, routing table entries, neighbor table entries, address map entries, etc.

According to a third aspect of the present invention, a method for operating a network node for communicating in a wireless communication network is described, the method comprises:
- generating and providing application-specific wireless communication signals for reception within the wireless communication network;
- receiving respective availability signals indicative of an availability or non-availability of one or more application control hubs for centralized control of data exchange within the wireless communication network with respect to a respective predetermined application function;
- switching operation of an application unit of the network node from a centralized-operation mode to a distributed operation mode with respect to the respective predetermined application function upon determining that the availability signal is indicative of the non-availability of the respective application control hub; wherein
- operating in the centralized-operation mode with respect to the respective predetermined application function comprises generating first application-specific wireless communication signals for communicating via the respective application control hub; and
- operating in the distributed-operation mode with respect to the respective predetermined application function comprises generating second application-specific communication signals for directly communicating with the at least one target network node and sending them directly to one or more of the at least one target network nodes.

The method of the third aspect thus shares the advantages of the network node of the first aspect of the present invention.

A fourth aspect of the invention is formed by a method for operating a wireless communication network. The method comprises:
- performing the method of the third aspect of the invention; and
- when operating in the centralized-operation mode with respect to the respective predetermined application function, receiving from the network nodes the first application-specific wireless communication signals as incoming wireless communication signals comprising payload indicative of a control-instruction for controlling operation of one or more target network nodes and providing output wireless communication signals comprising the control-instruction to the one or more target network nodes.

The method of the fourth aspect thus shares the advantages of the wireless communication network of the second aspect of the invention.

A fifth aspect of the invention is formed by a computer program that comprises instruction, which, when the program is executed by a computer, cause the computer to carry out the method of the third or fourth aspect of the invention.

It shall be understood that the network node of claim 1, the wireless communication network of claim 10, the methods of claims 13 and 14 and the computer program of claim 15, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows a schematic diagram of an embodiment of a wireless communication network comprising a network node and an application control hub,
Fig. 2 shows a schematic block diagram of an embodiment of a network node,
Fig. 3 shows a schematic block diagram of another embodiment of a network node,
Fig. 4 shows a schematic block diagram of yet another embodiment of a network node,
Fig. 5 shows a flow diagram of an embodiment of a method for operating a network node, and
Fig. 6 shows a flow diagram of an embodiment of a method for operating a wireless communication network.

### DETAILED DESCRIPTION OF EMBODIMENTS

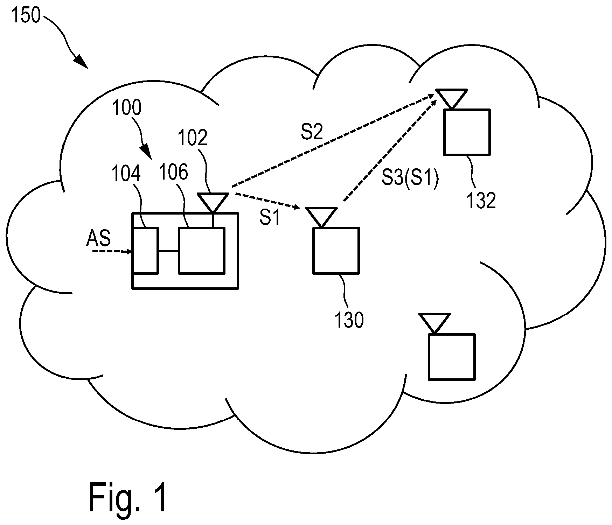

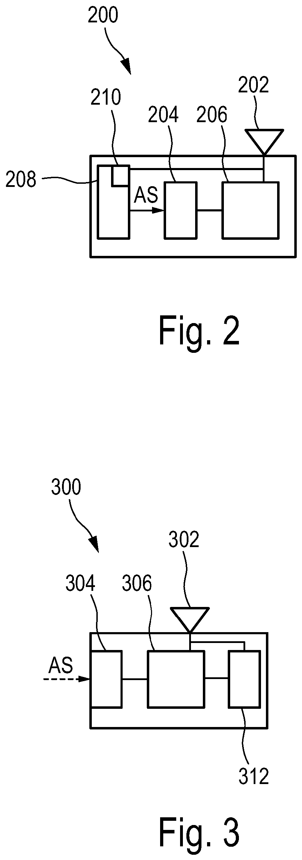

Fig. 1 shows a schematic diagram of an embodiment of a wireless communication network 150 comprising a network node 100, an application control hub 130 and a target network node 132. The network node 100 is suitable for communicating in the wireless communication network 150 and comprises an application unit 102 that is configured to perform one or more predetermined application functions and generate and provide respective application-specific wireless communication signals S1, S2 for reception by neighbor nodes 130, 132 within the wireless communication network 150. The network node 100 comprises an input interface 104 that is configured to receive respective availability signal AS indicative of an availability or non-availability of the application control hub 130 within the wireless communication network 150. The application control hub is a network node for centralized control of data exchange pertaining to a given one or a given set of application functions. In the exemplary wireless communication network 150, the availability signal is provided to the network node 100, for example by a dedicated node of the network. Alternatively, or additionally, as it will be discussed below with reference to Figs 2 and 3, other network nodes are configured to ascertain the availability or non-availability of the network control node or/and to receive the availability signal directly from the application control hub.

The control node 100 also comprises an operation-control unit 106 that is connected to the input interface 104 and configured to switch operation of the application unit 102 from a centralized-operation mode to a distributed operation mode with respect to the respective predetermined application function, upon determining that the availability signal is indicative of the non-availability of the respective application control hub 130.

In the centralized-operation mode with respect to a respective application function, the application unit is configured to generate first application-specific wireless communication signals S1 for communicating within the wireless communication network 150 via the application control hub 130. Thus, the first application-specific wireless communication signals are preferably unicast messages sent to the application control hub, which typically operates using a predetermined algorithm or engine rule and, whenever is necessary, conveys output messages S3 to the target network node 132 based on the first application-specific wireless communication signals received. As an example, in the context of a lighting network for performing a lighting control function as an application function, the network node 100 is configured to control operation of a wirelessly controllable lighting device such as target network node 132. For instance, the first application-specific wireless communication signals are indicative of a current state of a switch for controlling the lighting device 132. When a user actuates the switch for switching on the lighting device, the network node sends the first application-specific wireless communication signals S1 indicative of an actuation of the switch. The application control hub, in accordance with an algorithm or engine rule that associates the switch to the lighting device 132, sends an output message S3 indicative of an instruction to switch-on the light in accordance with the actuation of the switch.

The application unit 102 of the network node 100 is, however, also operable in the distributed-operation mode. In the distributed-operation mode, the application unit 102 is configured to generate second application-specific communication signals S2 for communicating with the at least one target network node 132 and to send them directly to one or more of the target network nodes.

In the example of the lighting network, the application unit is operated in the distributed-operation mode, when it has been determined that the application control hub is currently not available. In this operation mode, when the user actuates the switch, the network node is configured to provide the second application-specific communication signals S2, which in this particular example is also a wireless signal, directly to the target node 132. The second communication signal comprises either information pertaining to the state of the switch, which is then interpreted by the target network node to internally generate an instruction for operating the target network node 132 in accordance to the state of the switch, or it comprises directly the instruction for operating the target network node 132.

Another exemplary wireless communication network (not shown) includes more than one application control hub, each of which is configured to control data exchange or a respective application function or set of application functions. For instance, in addition to the application control hub 130, that is configured to control data exchange pertaining to the lighting control function described above, other application control hubs are part of the network and configured to control data exchange pertaining to other application functions. For example, the wireless communication network may include a peripheral gateway for performing, in cooperation with the other network nodes a people-counting function as an application function different from the lighting control function. Additionally, or alternatively, the wireless communication network may include dedicated application control hubs for controlling data exchange pertaining to a heating ventilating air-conditioning (HVAC) function that controls HVAC systems in a building or in a part thereof, a security monitoring function, an audiovisual control function for controlling, for example, a beamer or a sound or video system, etc. In the case where the wireless communication network includes multiple application control hubs, each associated to a different function, the operation of the application unit in the centralized or the distributed operation mode is defined with respect to a respective application function. For example, the application unit of the network node is operating in the distributed operation mode with respect to the lighting control function because the corresponding application control hub, e.g. a Hue bridge, is currently unavailable. Still, the same network node is operated in the centralized operation mode with respect to the HVAC function and provides the generated first HVAC-specific wireless communication signals to the corresponding HVAC control hub.

Another exemplary wireless communication network comprises a lighting gateway as an application control hub for controlling a lighting function and a HVAC controller for controlling an HVAC function. At least some of the luminaires, which are network nodes of the wireless communication network include both an occupancy sensor as well as a sensor bundle with temperature and humidity sensors. The lighting function is performed in cooperation with the lighting gateway, while the HVAC controller passively reads out the room occupancy data as well as the temperature data obtained from the sensor bundles for the network nodes and also controls the blinds and the HVAC sensors or actuators. The HVAC controller, may be also connected to a higher level building maintenance service (BMS) system, and it is configured to also send lighting overrides in case of emergency (i.e. the HVAC may instruct for instance to switch some or all of the luminaires on). If the lighting gateway becomes unavailable, the lighting nodes start operating in the distributed operation mode and directly communicate with each other to share occupancy events. If the HVAC controller becomes unavailable, the lighting nodes start operating in the distributed operation mode and may share their individual temperature readings with each other and determine an average room temperature and store this temperature for later retrieval by the HVAC controller once it becomes available again. In this way, the HVAC controller can quickly retrieve (albeit aggregate) past data when it becomes operational again. If the HVAC controller disappears, the lights may also adjust their lighting control scheme so that the lights in the emergency egress path of the office do not fully switch off but only dim to 20% light output, as the emergency lighting override via the HVAC controller is at the moment not functional.

Similarly, in normal operation the lighting gateway may communicate with the HVAC controller to coordinate on the control of the blinds. If the HVAC controller becomes unavailable, the lighting nodes may directly communicate with the blind controllers to ensure a graceful degradation for the blinds.

Figs. 2 and 3 show respective schematic block diagrams of two different embodiments 200, 300 of a network node. The following discussion will focus on those features that are different between network node 100 of Fig. 1, the network node 200 of Fig. 2 and the network node 300 of Fig. 3. Those features that are shared by the network nodes are referred to using the same numerals except for the first digit, which is "1" for the network node 100, "2" for the network node 200 and "3" for the network node 300.

The network node 200 comprises an application control hub detection unit 208 that is configured to ascertain the availability or the non-availability of the one or more application control hubs of the wireless communication network and to provide the respective availability signals to the input interface 204 of the network node. The ascertainment of the non-availability of the application control hub is performed, in this particular network node, at a network-monitoring unit 210, which is configured to monitor wireless communication signals and to ascertain the availability or the non-availability of the application control hub using the monitored wireless communication signals in accordance with a predetermined algorithm. For instance, the network monitoring unit is configured to detect certain anomalies in network traffic, which are associated to a missing or non-available application control hub. These anomalies include, for example, detection of an excessive amount of route request or other discovery messages, detection of so-called "last-breath" messages from the application control hub, either provided directly by the application control hub or provided via another node of the wireless communication network, detection of missing Link Status messages, detection of certain events by other nodes of the wireless communication network, etc. In this network node 200, a transmitting unit of the application unit 202 forms, together with a receiving unit, a transceiver unit to which the network-monitoring unit is connected for monitoring the wireless communication signals, which do not need to be specifically addressed to the network node and which can be monitored using a "promiscuous-mode".

Fig. 3, in turn, shows a schematic block diagram of another embodiment of a network node 300. The network node comprises a storage unit 312 that stores network-data indicative of the network nodes of the wireless communication network. The network-data comprises one or more application control entries pertaining to the respective application control hubs. The network-data includes routing-data indicative of available communication routes within the wireless communication network. The routing-data comprises one or more control-node entries pertaining to communication routes between the network node 300 and the application control hub. The application unit 302 is connected to the storage unit and configured to provide the first application-specific wireless communication signals in dependence on the network-data or the routing-data. Further, the operation control unit 306 is configured, in the distributed-operation mode to disable access of the application unit to the control-node entries for a predetermined time span.

The routing-data includes, for example, one or more of the following: bindings, routing table entries, neighbor table entries, address map entries, etc., or any combination thereof. In addition, the selection of the predetermined time span can result in a temporary disablement of the access to the control-node entries or in a permanent disablement of said access by, for example, deleting the entries.

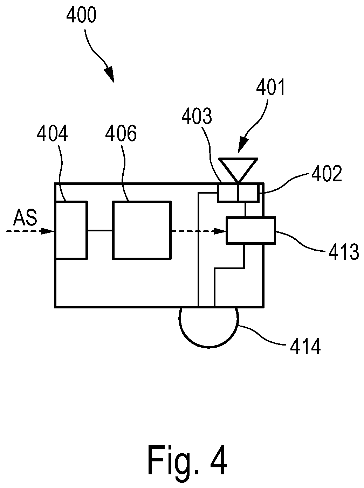

Fig. 4 shows a schematic block diagram of yet another embodiment of a network node. The following discussion will focus on those features that are different between network nodes 100, 200 and 300 of Figs. 1, 2 and 3 and the network node 400 of Fig. 4. Those features that are shared by the network nodes 100. 200, 300 and 400 are referred to using the same numerals except for the first digit, which is "1" for the network node 100, "2" for the network node 200 "3" for the network node 300 and "4" for the network node 400.

Network node 400 comprises a receiver unit 403 for receiving wireless communication signals from the application control hub of the wireless communication network. The receiver unit 403 forms together with a transmitter unit of the application unit 402, a transceiver unit 401 of the network node, configured to provide and receive wireless communication signals. The network node further comprises a functional unit that is connected to the receiver unit and configured to perform a wirelessly controllable node-function. In the case of network node 400, the functional unit is a lighting unit 414. The lighting unit is wirelessly controllable using application-specific wireless communication signals within the wireless communication network. The network node 400 also comprises a user-input interface 413 for receiving a user-input signal. Suitable user-input interfaces include buttons, switches, controllers, touch pads, etc. Alternatively, additionally, a network node comprises a sensing unit, such as a presence or movement sensor, a light sensor, a humidity sensor, etc. The application unit 402 is connected to the user-input interface or to the sensing unit and configured to generate and provide the first application-specific wireless communication signals S1 and the second application-specific communication signals S2 in dependence on the received user-input signals or the sensed parameter.

The first application-specific wireless communication signals and the second application-specific communications signals generated by the application unit 402 of the network node 400 comprise respective control-instructions data for controlling the functional unit 414. For example, in the case of the user-input interface being a switch, actuating the switch while operating in the centralized-operation mode causes the application unit to provide a first application-specific wireless communication signal to the application control hub, which is assumed to be available. The application control hub receives the first communication signal indicative of the state of the switch and generates and outputs an instruction for controlling the lighting unit 414, which is received by the receiver unit 403 of the network node. The application unit 402 is further configured, when operating in the distributed-operation mode, to provide the second communication signal directly to the functional unit for performing the node-function. This is preferably done via a wired connection.

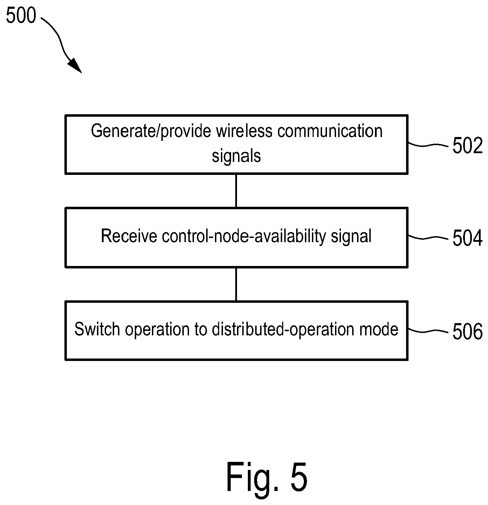

Fig. 5 shows a flow diagram of an embodiment of a method 500 for operating a network node for communicating in a wireless communication network. The method comprises, in a step 502, generating and providing application-specific wireless communication signals for reception within the wireless communication network. The method also comprises, in a step 504, receiving respective availability signals indicative of an availability or non-availability of one or more application control hubs for centralized control of data exchange with respect to a respective predetermined application function within the wireless communication network. The method also comprises, in a step 506, switching operation of an application unit the network node from a centralized-operation mode to a distributed operation mode with respect to the respective application control hub upon determining that the availability signal is indicative of the non-availability of the application control hub. The application unit of the network node is configured to perform one or more predetermined application functions and to generate and provide application-specific wireless communication signals for reception within the wireless communication network. Operating in the centralized-operation mode with respect to the respective predetermined application function comprises generating first application-specific wireless communication signals for communicating via the respective application control hub. Operating in the distributed-operation mode with respect to the respective predetermined application function comprises generating second application-specific communication signals for directly communicating with the at least one target network node and sending them directly to one or more of the at least target network nodes.

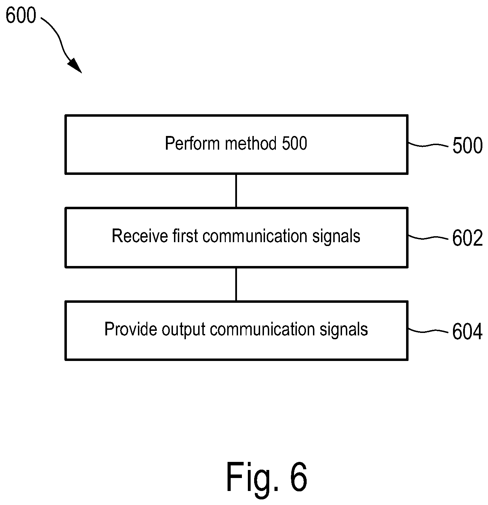

Fig. 6 shows a flow diagram of an embodiment of a method 600 for operating a wireless communication network. The method comprises performing the method 500 of Fig. 5. The method also comprises, when operating in the centralized-operation mode with respect to the respective predetermined application function, receiving, in a step 602, from the network nodes the first application-specific wireless communication signals as incoming wireless communication signals comprising payload indicative of a control-instruction for controlling operation of one or more target network nodes and providing, in a step 604, output wireless communication signals comprising the control-instruction to the one or more target network nodes.

In summary, the invention is directed to a network node for communicating in a wireless communication network that comprises an application unit for performing one or more predetermined application functions. The network node comprises an input interface for receiving availability signals indicative of an availability or non-availability of a respective application control hub for centralized control of data exchange with respect to the respective application function. An operation-control unit is configured to switch operation of the application unit from a centralized-operation mode to a distributed operation mode upon determining that the availability signal is indicative of the non-availability of the respective application control hub thus implementing an alternative operation mode where instead of providing first wireless communication signals to the application control hub, second communication signals are sent directly to one or more of the target network nodes.

## Claims

1. A network node (100) for communicating in a wireless communication network (150), the network node comprising:
- an application unit (102) configured to perform one or more predetermined application functions and configured to generate and provide application-specific wireless communication signals for reception within the wireless communication network;
- an input interface (104) configured to receive respective availability signals (AS) indicative of an availability or non-availability of one or more application control hubs (130) for centralized control of data exchange within the wireless communication network with respect to the respective predetermined application function;
- an operation-control unit (106) connected to the input interface and configured to switch operation of the application unit from a centralized-operation mode to a distributed operation mode with respect to the respective predetermined application function upon determining that the availability signal is indicative of the non-availability of the respective application control hub; wherein
- in the centralized-operation mode with respect to the respective predetermined application function, the application unit is configured to generate first application-specific wireless communication signals (S1) for communicating via the respective application control hub; and
- in the distributed-operation mode with respect to the respective predetermined application function, the application unit is configured to generate second application-specific communication signals (S2) for directly communicating with at least one target network node (132) within the wireless communication network and to send them directly to one or more of the at least one target network node;
wherein the network node (100) further comprising:
- a storage unit (312) for
o storing network-data indicative of the network nodes of the wireless communication network, the network-data comprising one or more application control hub entries pertaining to the respective application control hubs; and
∘ storing routing-data indicative of available communication routes within the wireless communication network, the routing data comprising one or more control-node entries pertaining to communication routes between the network node and the respective application control hub;
the network node (100) **characterised in that**
- the application unit (302) is connected to the storage unit and configured to provide the first application-specific wireless communication signals in dependence on the network-data; and
- the operation-control unit (306) is configured, in the distributed-operation mode to disable access of the application unit to the control-node entries for a predetermined time span.

2. The network node of claim 1, wherein the operation control unit is further configured, when the application unit is operated in the distributed-operation mode with respect to the predetermined application function, to switch operation of the application unit from the distributed operation mode to the centralized-operation mode upon determining that the availability signal is indicative of the availability of the respective application control hub.

3. The network node (200) of claim 1 or 2, further comprising:
- an application control hub detection unit (208), configured to ascertain the availability or the non-availability of the one or more application control hubs within the wireless communication network and to provide the respective availability signal to the input interface.

4. The network node (200) of claim 3, wherein the application control hub detection unit (208) comprises a network-monitoring unit (210) configured to monitor application-specific wireless communication signals within the wireless communication network and to ascertain the availability or the non-availability of the application control hub using the monitored application-specific wireless communication signals in accordance with a predetermined algorithm.

5. The network node of claims 3 or 4, wherein:
- the application control hub detection unit is further configured to ascertain an expected-disconnection time span of the application control hub from the wireless communication network and to provide a disconnection-time signal indicative thereof; and wherein
- the operation-control unit is further configured to receive the disconnection-time signal and to switch operation from the respective centralized-operation mode to the respective distributed operation mode further upon determining that the expected-disconnection time span is longer than a predetermined threshold time-span amount.

6. The network node (400) of any of the preceding claims, further comprising:
- a receiver unit (403) for receiving wireless communication signals from the application control hub of the wireless communication network;
- a functional unit (414) connected to the receiver unit and configured to perform a wirelessly controllable node-function; and
wherein, the first application-specific wireless communication signals and the second application-specific communications signals generated by the application function comprise respective control-data for controlling the functional unit and wherein, the operation-control unit is further configured, in the distributed-operation mode with respect to the respective predetermined application function, to provide the second application-specific communication signals directly to the functional unit for performing the node-function.

7. The network node of any of the preceding claims, wherein while the application unit is operated in the distributed operation mode with respect to the predetermined application function, the second communication signals are sent directly to one or more of the target network nodes as a wireless broadcast or a wireless groupcast signal with a predetermined maximum number of allowed hops.

8. The network node (400) of any of the preceding claims, further comprising:
- a user-input interface (413) for receiving a user-input signal;
and wherein,
- the application unit (402) is connected to the user-input interface and configured to generate and provide the first application-specific wireless communication signals (S1) and the second application-specific communication signals (S2) in dependence on the received user-input signals.

9. A wireless communication network (150) comprising:
- at least one network node (100) according to any of the preceding claims;
and
- at least one application control hub (130) configured to receive from the network nodes the first application-specific wireless communication signals (S1) as incoming wireless communication signals comprising payload indicative of a control-instruction for controlling operation of one or more target network nodes (132) and to provide output wireless communication signals (S3) comprising the control-instruction to the one or more target network nodes.

10. The wireless communication network (150) of claim 9, wherein:
- the at least one application control hub (130) is configured to provide to the input interface (104) of the at least one network node (100), an availability signal (AS) indicative of an expected non-availability of the application control hub within the wireless communication network; and wherein
- the operation-control unit (106) of the at least one network node (100) is configured to switch operation of the network node from the centralized-operation mode to the distributed operation mode upon reception of the availability signal indicative of an expected non-availability of the application control hub.

11. The wireless communication network of claims 9 or 10, wherein at least one network node is in accordance with claim 2 and wherein:
- the application control hub, when temporarily disconnected from the wireless communication network is configured to provide to the at least one network node, an availability signal indicative of an expected availability of the application control hub within the wireless communication network; and wherein
- the operation-control unit is configured to switch operation of the application unit from the distributed operation mode to the centralized-operation mode with respect to the respective application function upon reception of the availability signal indicative of an expected availability of the application control hub.

12. A method (500) for operating a network node for communicating in a wireless communication network, the method comprising:
- generating and providing (502) application-specific wireless communication signals for reception within the wireless communication network;
- receiving (504) respective availability signals indicative of an availability or non-availability of one or more application control hubs for centralized control of data exchange within the wireless communication network with respect to a respective predetermined application function;
- switching operation (506) of an application unit of the network node from a centralized-operation mode to a distributed operation mode with respect to the respective predetermined application function upon determining that the availability signal is indicative of the non-availability of the respective application control hub; wherein
- operating in the centralized-operation mode with respect to the respective predetermined application function comprises generating first application-specific wireless communication signals for communicating via the respective application control hub; and
- operating in the distributed-operation mode with respect to the respective predetermined application function comprises generating second application-specific communication signals for directly communicating with the at least one target network node and sending them directly to one or more of the at least one target network node;
wherein the network node (100) comprising:
- a storage unit (312) for:
o storing network-data indicative of the network nodes of the wireless communication network, the network-data comprising one or more application control hub entries pertaining to the respective application control hubs; and
o storing routing-data indicative of available communication routes within the wireless communication network, the routing data comprising one or more control-node entries pertaining to communication routes between the network node and the respective application control hub; the method **characterised in that**
- the application unit (302) is connected to the storage unit and configured to provide the first application-specific wireless communication signals in dependence on the network-data; and
- an operation control unit (306) of the network node (100) is configured, in the distributed-operation mode to disable access of the application unit to the control-node entries for a predetermined time span.

13. The method (600) of claim 12, wherein the method further comprises:
- when operating in the centralized-operation mode with respect to the respective predetermined application function, receiving (602) from the network nodes the first application-specific wireless communication signals as incoming wireless communication signals comprising payload indicative of a control-instruction for controlling operation of one or more target network nodes and providing (604) output wireless communication signals comprising the control-instruction to the one or more target network nodes.

14. A computer program comprising instructions, which, when the program is executed by a computer, cause the computer to carry out the method of claim 12 or 13.

## Patentansprüche

1. Netzknoten (100) zum Kommunizieren in einem drahtlosen Kommunikationsnetz (150), der Netzknoten umfassend:
- eine Anwendungseinheit (102), die konfiguriert ist, um eine oder mehrere zuvor bestimmte Anwendungsfunktionen durchzuführen und konfiguriert ist, um anwendungsspezifische drahtlose Kommunikationssignale für einen Empfang innerhalb des drahtlosen Kommunikationsnetzes zu erzeugen und bereitzustellen;
- eine Eingabeschnittstelle (104), die konfiguriert ist, um jeweilige Verfügbarkeitssignale (AS) zu empfangen, die eine Verfügbarkeit oder eine Nichtverfügbarkeit von einem oder mehreren Anwendungssteuerungshubs (130) für eine zentralisierte Steuerung eines Datenaustauschs innerhalb des drahtlosen Kommunikationsnetzes hinsichtlich der jeweiligen zuvor bestimmten Anwendungsfunktion anzeigen;
- eine Betriebssteuerungseinheit (106), die mit der Eingabeschnittstelle verbunden und konfiguriert ist, um einen Betrieb der Anwendungseinheit von einem zentralisierten Betriebsmodus zu einem verteilten Betriebsmodus hinsichtlich der jeweiligen zuvor bestimmten Anwendungsfunktion umzuschalten, wenn bestimmt wird, dass das Verfügbarkeitssignal die Nichtverfügbarkeit des jeweiligen Anwendungssteuerungshub anzeigt; wobei
- in dem zentralisierten Betriebsmodus hinsichtlich der jeweiligen zuvor bestimmten Anwendungsfunktion, die Anwendungseinheit konfiguriert ist, um erste anwendungsspezifische drahtlose Kommunikationssignale (S1) zum Kommunizieren über den jeweiligen Anwendungssteuerungshub zu erzeugen; und
- in dem verteilten Betriebsmodus hinsichtlich der jeweiligen zuvor bestimmten Anwendungsfunktion, die Anwendungseinheit konfiguriert ist, um zweite anwendungsspezifische Kommunikationssignale (S2) zum direkten Kommunizieren mit mindestens einem Zielnetzknoten (132) innerhalb des drahtlosen Kommunikationsnetzes zu erzeugen und um diese direkt an einen oder mehrere des mindestens einen Zielnetzknotens zu senden;
wobei der Netzknoten (100) ferner umfasst:
- eine Speichereinheit (312) zum
∘ Speichern von Netzdaten, die die Netzknoten des drahtlosen Kommunikationsnetzes anzeigen, die Netzdaten umfassend einen oder mehrere Anwendungssteuerungshubeinträge, die sich auf die jeweiligen Anwendungssteuerungshubs beziehen; und
∘ Speichern von Routing-Daten, die verfügbare Kommunikationsrouten innerhalb des drahtlosen Kommunikationsnetzes anzeigen, die Routing-Daten umfassend einen oder mehrere Steuerungsknoteneinträge, die sich auf Kommunikationsrouten zwischen dem Netzknoten und den jeweiligen Anwendungssteuerungshub beziehen;
der Netzknoten (100) **dadurch gekennzeichnet ist, dass**
die Anwendungseinheit (302) mit der Speichereinheit verbunden und konfiguriert ist, um die ersten anwendungsspezifischen drahtlosen Kommunikationssignale in Abhängigkeit von den Netzdaten bereitzustellen; und
die Betriebssteuerungseinheit (306) konfiguriert ist, um in dem verteilten Betriebsmodus einen Zugriff der Anwendungseinheit auf die Steuerungsknoteneinträge für eine zuvor bestimmte Zeitspanne zu deaktivieren.

2. Netzknoten nach Anspruch 1, wobei die Betriebssteuerungseinheit ferner konfiguriert ist, um, wenn die Anwendungseinheit in dem verteilten Betriebsmodus bezüglich der zuvor bestimmten Anwendungsfunktion betrieben wird, den Betrieb der Anwendungseinheit von dem verteilten Betriebsmodus zu dem zentralisierten Betriebsmodus umzuschalten, wenn bestimmt wird, dass das Verfügbarkeitssignal die Verfügbarkeit des jeweiligen Anwendungssteuerungshub anzeigt.

3. Netzknoten (200) nach Anspruch 1 oder 2, ferner umfassend:
- eine Anwendungssteuerungshub-Erfassungseinheit (208), die konfiguriert ist, um die Verfügbarkeit oder die Nichtverfügbarkeit des einen oder der mehreren Anwendungssteuerungshubs innerhalb des drahtlosen Kommunikationsnetzes zu ermitteln und um das jeweilige Verfügbarkeitssignal an die Eingabeschnittstelle bereitzustellen.

4. Netzknoten (200) nach Anspruch 3, wobei die Anwendungssteuerungshub-Erfassungseinheit (208) eine Netzüberwachungseinheit (210) umfasst, die konfiguriert ist, um anwendungsspezifische drahtlose Kommunikationssignale innerhalb des drahtlosen Kommunikationsnetzes zu überwachen und um die Verfügbarkeit oder die Nichtverfügbarkeit des Anwendungssteuerungshub unter Verwendung der überwachten anwendungsspezifischen drahtlosen Kommunikationssignale gemäß einem zuvor bestimmten Algorithmus zu überwachen.

5. Netzknoten nach Anspruch 3 oder 4, wobei:
- die Anwendungssteuerungshub-Erfassungseinheit ferner konfiguriert ist, um eine Zeitspanne einer erwarteten Trennung des Anwendungssteuerungshub von dem drahtlosen Kommunikationsnetz zu ermitteln und um ein Trennungszeitsignal bereitzustellen, das dieses anzeigt; und wobei
die Betriebssteuerungseinheit ferner konfiguriert ist, um das Trennzeitsignal zu empfangen und um den Betrieb von dem jeweiligen zentralisierten Betriebsmodus zu dem jeweiligen verteilten Betriebsmodus weiter umzuschalten, wenn bestimmt wird, dass die Zeitspanne der erwarteten Trennung länger als ein zuvor bestimmter Schwellenzeitspannenbetrag ist.

6. Netzknoten (400) nach einem der vorstehenden Ansprüche, ferner umfassend:
eine Empfängereinheit (403) zum Empfangen von drahtlosen Kommunikationssignalen von dem Anwendungssteuerungshub des drahtlosen Kommunikationsnetzes;
eine funktionale Einheit (414), die mit der Empfängereinheit verbunden und konfiguriert ist, um eine drahtlos steuerbare Knotenfunktion durchzuführen; und
wobei die ersten anwendungsspezifischen drahtlosen Kommunikationssignale und die zweiten anwendungsspezifischen Kommunikationssignale, die durch die Anwendungsfunktion erzeugt werden, jeweilige Steuerungsdaten zum Steuern der funktionalen Einheit umfassen und wobei die Betriebssteuerungseinheit ferner konfiguriert ist, um, in dem verteilten Betriebsmodus hinsichtlich der jeweiligen zuvor bestimmten Anwendungsfunktion, die zweiten anwendungsspezifischen Kommunikationssignale direkt an die funktionale Einheit zum Durchführen der Knotenfunktion bereitzustellen.

7. Netzknoten nach einem der vorstehenden Ansprüche, wobei, während die Anwendungseinheit in dem verteilten Betriebsmodus bezüglich der zuvor bestimmten Anwendungsfunktion betrieben wird, die zweiten Kommunikationssignale direkt an einen oder mehrere der Zielnetzknoten als ein drahtloses Broadcast- oder drahtloses Groupcast-Signal mit einer zuvor bestimmten maximalen Anzahl von erlaubten Hops gesendet werden.

8. Netzknoten (400) nach einem der vorstehenden Ansprüche, ferner umfassend:
- eine Benutzereingabeschnittstelle (413) zum Empfangen eines Benutzereingabesignals;
und wobei,
- die Anwendungseinheit (402) mit der Benutzereingabeschnittstelle verbunden und konfiguriert ist, um die ersten anwendungsspezifischen drahtlosen Kommunikationssignale (S1) und die zweiten anwendungsspezifischen Kommunikationssignale (S2) in Abhängigkeit von den empfangenen Benutzereingabesignalen zu erzeugen und bereitzustellen.

9. Drahtloses Kommunikationsnetz (150), umfassend:
- mindestens ein Netzknoten (100) nach einem der vorstehenden Ansprüche; und
mindestens ein Anwendungssteuerungshub (130), der konfiguriert ist, um von den Netzknoten die ersten anwendungsspezifischen drahtlosen Kommunikationssignale (S1) als eingehende drahtlose Kommunikationssignale, umfassend eine Nutzlast, die eine Steuerungsanweisung zum Steuern des Betriebs eines oder mehrerer Zielnetzknoten (132) anzeigt, zu empfangen und um ausgehende drahtlose Kommunikationssignale (S3), umfassend die Steuerungsanweisung, an den einen oder die mehreren Zielnetzknoten bereitzustellen.

10. Drahtloses Kommunikationsnetz (150) nach Anspruch 9, wobei:
der mindestens eine Anwendungssteuerungshub (130) konfiguriert ist, um der Eingabeschnittstelle (104) des mindestens einen Netzknotens (100) ein Verfügbarkeitssignal (AS) bereitzustellen, das eine erwartete Nichtverfügbarkeit des Anwendungssteuerungshub innerhalb des drahtlosen Kommunikationsnetzes anzeigt; und wobei
die Betriebssteuerungseinheit (106) des mindestens einen Netzknotens (100) konfiguriert ist, um den Betrieb des Netzknotens von dem zentralisierten Betriebsmodus zu dem verteilten Betriebsmodus bei dem Empfang des Verfügbarkeitssignals umzuschalten, das eine erwartete Nichtverfügbarkeit des Anwendungssteuerungshub anzeigt.

11. Drahtloses Kommunikationsnetz nach Anspruch 9 oder 10, wobei mindestens ein Netzknoten nach Anspruch 2 ist und wobei:
der Anwendungssteuerungshub, wenn er vorübergehend von dem drahtlosen Kommunikationsnetz getrennt ist, konfiguriert ist, um dem mindestens einen Netzknoten ein Verfügbarkeitssignal bereitzustellen, das eine erwartete Verfügbarkeit des Anwendungssteuerungshub innerhalb des drahtlosen Kommunikationsnetzes anzeigt; und wobei
die Betriebssteuerungseinheit konfiguriert ist, um den Betrieb der Anwendungseinheit von dem verteilten Betriebsmodus zu dem zentralisierten Betriebsmodus hinsichtlich der jeweiligen Anwendungsfunktion bei dem Empfang des Verfügbarkeitssignals umzuschalten, das eine erwartete Verfügbarkeit des Anwendungssteuerungshub anzeigt.

12. Verfahren (500) zum Betreiben eines Netzknotens zum Kommunizieren in einem drahtlosen Kommunikationsnetz, das Verfahren umfassend:
Erzeugen und Bereitstellen (502) anwendungsspezifischer drahtloser Kommunikationssignale für den Empfang innerhalb des drahtlosen Kommunikationsnetzes;
Empfangen (504) jeweiliger Verfügbarkeitssignale, die eine Verfügbarkeit oder eine Nichtverfügbarkeit eines oder mehrerer Anwendungssteuerungshubs für eine zentralisierte Steuerung des Datenaustauschs innerhalb des drahtlosen Kommunikationsnetzes hinsichtlich einer jeweiligen zuvor bestimmten Anwendungsfunktion anzeigen;
Schaltbetrieb (506) einer Anwendungseinheit des Netzknotens von einem zentralisierten Betriebsmodus zu einem verteilten Betriebsmodus hinsichtlich der jeweiligen zuvor bestimmten Anwendungsfunktion bei dem Bestimmen, dass das Verfügbarkeitssignal die Nichtverfügbarkeit des jeweiligen Anwendungssteuerungshub anzeigt; wobei
- Betreiben in dem zentralisierten Betriebsmodus hinsichtlich der jeweiligen zuvor bestimmten Anwendungsfunktion das Erzeugen erster anwendungsspezifischer drahtloser Kommunikationssignale zum Kommunizieren über den jeweiligen Anwendungssteuerungshub umfasst; und
Betreiben in dem verteilten Betriebsmodus hinsichtlich der jeweiligen zuvor bestimmten Anwendungsfunktion das Erzeugen von zweiten anwendungsspezifischen Kommunikationssignalen zum direkten Kommunizieren mit dem mindestens einen Zielnetzknoten und das direkte Senden dieser an einen oder mehrere des mindestens einen Zielnetzknotens umfasst;
wobei der Netzknoten (100) umfasst:
- eine Speichereinheit (312) zum:
∘ Speichern von Netzdaten, die die Netzknoten des drahtlosen Kommunikationsnetzes anzeigen, die Netzdaten umfassend einen oder mehrere Anwendungssteuerungshubeinträge, die sich auf die jeweiligen Anwendungssteuerungshubs beziehen; und
∘ Speichern von Routing-Daten, die verfügbare Kommunikationsrouten innerhalb des drahtlosen Kommunikationsnetzes anzeigen, die Routing-Daten umfassend einen oder mehrere Steuerungsknoteneinträge, die sich auf Kommunikationsrouten zwischen dem Netzknoten und den jeweiligen Anwendungssteuerungshub beziehen; wobei das Verfahren **dadurch gekennzeichnet ist, dass**
die Anwendungseinheit (302) mit der Speichereinheit verbunden und konfiguriert ist, um die ersten anwendungsspezifischen drahtlosen Kommunikationssignale in Abhängigkeit von den Netzdaten bereitzustellen; und
eine Betriebssteuerungseinheit (306) des Netzknotens (100) konfiguriert ist, um in dem verteilten Betriebsmodus den Zugriff der Anwendungseinheit auf die Steuerungsknoteneinträge für eine zuvor bestimmte Zeitspanne zu deaktivieren.

13. Verfahren (600) nach Anspruch 12, wobei das Verfahren ferner umfasst:
- bei dem Betreiben in dem zentralisierten Betriebsmodus hinsichtlich der jeweiligen zuvor bestimmtem Anwendungsfunktion, Empfangen (602) von den Netzknoten der ersten anwendungsspezifischen drahtlosen Kommunikationssignale als eingehende drahtlose Kommunikationssignale, umfassend die Nutzlast, die eine Steuerungsanweisung zum Steuern des Betriebs eines oder mehrerer Zielnetzknoten anzeigt, und Bereitstellen (604) von ausgehenden drahtlosen Kommunikationssignalen, umfassend die Steuerungsanweisung, an den einen oder die mehreren Zielnetzknoten.

14. Computerprogramm, umfassend Anweisungen, die, wenn das Programm durch einen Computer ausgeführt wird, den Computer veranlassen, das Verfahren nach Anspruch 12 oder 13 vorzunehmen.

## Revendications

1. Nœud de réseau (100) permettant de communiquer dans un réseau de communication sans fil (150), le nœud de réseau comprenant :
- une unité d'application (102) configurée pour mettre en œuvre une ou plusieurs fonctions d'application prédéterminées et configurée pour générer et fournir des signaux de communication sans fil spécifiques de l'application pour réception au sein du réseau de communication sans fil ;
- une interface d'entrée (104) configurée pour recevoir des signaux de disponibilité (AS) respectifs indiquant une disponibilité ou une non-disponibilité d'un ou plusieurs centres de commande d'application (130) pour une commande centralisée d'échange de données au sein du réseau de communication sans fil par rapport à la fonction d'application prédéterminée respective ;
- une unité de commande de fonctionnement (106) connectée à l'interface d'entrée et configurée pour commuter le fonctionnement de l'unité d'application d'un mode de fonctionnement centralisé à un mode de fonctionnement distribué par rapport à la fonction d'application prédéterminée respective lorsqu'on détermine que le signal de disponibilité indique la non-disponibilité du centre de commande d'application respectif ; dans lequel
- dans le mode de fonctionnement centralisé par rapport à la fonction d'application prédéterminée respective, l'unité d'application est configurée pour générer des premiers signaux de communication sans fil spécifiques de l'application (S1) permettant de communiquer par l'intermédiaire du centre de commande d'application respectif ; et
- dans le mode de fonctionnement distribué par rapport à la fonction d'application prédéterminée respective, l'unité d'application est configurée pour générer des seconds signaux de communication sans fil spécifiques de l'application (S2) permettant de communiquer directement avec au moins un nœud de réseau cible (132) au sein du réseau de communication sans fil et pour les envoyer directement à un ou plusieurs parmi l'au moins un nœud de réseau cible ;
dans lequel le nœud de réseau (100) comprend en outre :
- une unité de stockage (312) pour
∘ le stockage de données de réseau indiquant les nœuds de réseau du réseau de communication sans fil, les données de réseau comprenant une ou plusieurs entrées de centre de commande d'application se rapportant aux centres de commande d'application respectifs ; et
∘ le stockage de données de routage indiquant des routes de communication disponibles au sein du réseau de communication sans fil, les données de routage comprenant une ou plusieurs entrées de nœud de commande se rapportant à des routes de communication entre le nœud de réseau et le centre de commande d'application respectif ;
le nœud de réseau (100) étant **caractérisé en ce que**
- l'unité d'application (302) est connectée à l'unité de stockage et configurée pour fournir les premiers signaux de communication sans fil spécifiques de l'application en dépendance des données de réseau ; et
- l'unité de commande de fonctionnement (306) est configurée, dans le mode de fonctionnement distribué pour désactiver l'accès de l'unité d'application aux entrées de nœud de commande pendant un intervalle de temps prédéterminé.

2. Nœud de réseau selon la revendication 1, dans lequel l'unité de commande de fonctionnement est configurée en outre, lorsque l'unité d'application est mise en fonctionnement dans le mode de fonctionnement distribué par rapport à la fonction d'application prédéterminée, pour commuter le fonctionnement de l'unité d'application du mode de fonctionnement distribué au mode de fonctionnement centralisé lorsqu'on détermine que le signal de disponibilité indique la disponibilité du centre de commande d'application respectif.

3. Nœud de réseau (200) selon la revendication 1 ou 2, comprenant en outre :
- une unité de détection de centre de commande d'application (208), configurée pour constater la disponibilité ou la non-disponibilité du ou des centres de commande d'application au sein du réseau de communication sans fil et pour fournir le signal de disponibilité respectif à l'interface d'entrée.

4. Nœud de réseau (200) selon la revendication 3, dans lequel l'unité de détection de centre de commande d'application (208) comprend une unité de surveillance réseau (210) configurée pour surveiller des signaux de communication sans fil spécifiques de l'application au sein du réseau de communication sans fil et pour constater la disponibilité ou la non-disponibilité du centre de commande d'application à l'aide des signaux de communication sans fil spécifiques de l'application surveillés conformément à un algorithme prédéterminé.

5. Nœud de réseau selon les revendications 3 ou 4, dans lequel :
- l'unité de détection de centre de commande d'application est configurée en outre pour constater un intervalle de temps de déconnexion attendu du centre de commande d'application par rapport au réseau de communication sans fil et pour fournir un signal de temps de déconnexion indiquant celui-ci ; et dans lequel
- l'unité de commande de fonctionnement est configurée en outre pour recevoir le signal de temps de déconnexion et pour commuter le fonctionnement du mode de fonctionnement centralisé respectif au mode de fonctionnement distribué respectif lorsqu'on détermine en outre que l'intervalle de temps de déconnexion attendu est plus long qu'une valeur d'intervalle de temps seuil prédéterminé.

6. Nœud de réseau (400) selon l'une quelconque des revendications précédentes, comprenant en outre :
- une unité de réception (403) permettant de recevoir des signaux de communication sans fil en provenance du centre de commande d'application du réseau de communication sans fil ;
- une unité fonctionnelle (414) connectée à l'unité de réception et configurée pour mettre en œuvre une fonction de nœud commandable sans fil ; et
dans lequel, les premiers signaux de communication sans fil spécifiques de l'application et les seconds signaux de communication sans fil spécifiques de l'application générés par la fonction d'application comprennent des données de commande respectives permettant de commander l'unité fonctionnelle et dans lequel, l'unité de commande de fonctionnement est configurée en outre, dans le mode de fonctionnement distribué par rapport à la fonction d'application prédéterminée respective, pour fournir les seconds signaux de communication sans fil spécifiques de l'application directement à l'unité fonctionnelle pour la mise en œuvre de la fonction de nœud.

7. Nœud de réseau selon l'une quelconque des revendications précédentes, dans lequel alors que l'unité d'application est mise en fonctionnement dans le mode de fonctionnement distribué par rapport à la fonction d'application prédéterminée, les seconds signaux de communication sont envoyés directement à un ou plusieurs des nœuds de réseau cibles en tant que signal de diffusion sans fil ou de diffusion groupée sans fil avec un nombre maximal prédéterminé de sauts autorisés.

8. Nœud de réseau (400) selon l'une quelconque des revendications précédentes, comprenant en outre :
- une interface d'entrée utilisateur (413) permettant de recevoir un signal d'entrée utilisateur ;
et dans lequel,
- l'unité d'application (402) est connectée à l'interface d'entrée utilisateur et configurée pour générer et fournir les premiers signaux de communication sans fil spécifiques de l'application (S1) et les seconds signaux de communication sans fil spécifiques de l'application (S2) en dépendance des signaux d'entrée utilisateur reçus.

9. Réseau de communication sans fil (150) comprenant :
- au moins un nœud de réseau (100) selon l'une quelconque des revendications précédentes ; et
- au moins un centre de commande d'application (130) configuré pour recevoir en provenance des nœuds de réseau les premiers signaux de communication sans fil spécifiques de l'application (S1) en tant que signaux de communication sans fil entrants comprenant une charge utile indiquant une instruction de commande permettant de commander le fonctionnement d'un ou plusieurs nœuds de réseau cibles (132) et pour fournir des signaux de communication sans fil de sortie (S3) comprenant l'instruction de commande au ou aux nœuds de réseau cibles.

10. Réseau de communication sans fil (150) selon la revendication 9, dans lequel :
- l'au moins un centre de commande d'application (130) est configuré pour fournir à l'interface d'entrée (104) de l'au moins un nœud de réseau (100), un signal de disponibilité (AS) indiquant une non-disponibilité attendue du centre de commande d'application au sein du réseau de communication sans fil ; et dans lequel
- l'unité de commande de fonctionnement (106) de l'au moins un nœud de réseau (100) est configurée pour commuter le fonctionnement du nœud de réseau du mode de fonctionnement centralisé au mode de fonctionnement distribué à la réception du signal de disponibilité indiquant une non-disponibilité attendue du centre de commande d'application.

11. Réseau de communication sans fil selon les revendications 9 ou 10, dans lequel au moins un nœud de réseau est selon la revendication 2 et dans lequel :
- le centre de commande d'application, lorsqu'il est temporairement déconnecté du réseau de communication sans fil est configuré pour fournir à l'au moins un nœud de réseau, un signal de disponibilité indiquant une disponibilité attendue du centre de commande d'application au sein du réseau de communication sans fil ; et dans lequel
- l'unité de commande de fonctionnement est configurée pour commuter le fonctionnement de l'unité d'application du mode de fonctionnement distribué au mode de fonctionnement centralisé par rapport à la fonction d'application respective à la réception du signal de disponibilité indiquant une disponibilité attendue du centre de commande d'application.

12. Procédé (500) permettant de faire fonctionner un nœud de réseau pour une communication dans un réseau de communication sans fil, le procédé comprenant :
- la génération et la fourniture (502) de signaux de communication sans fil spécifiques de l'application pour réception au sein du réseau de communication sans fil ;
- la réception (504) de signaux de disponibilité respectifs indiquant une disponibilité ou une non-disponibilité d'un ou plusieurs centres de commande d'application pour une commande centralisée d'échange de données au sein du réseau de communication sans fil par rapport à une fonction d'application prédéterminée respective ;
- la commutation de fonctionnement (506) d'une unité d'application du nœud de réseau d'un mode de fonctionnement centralisé à un mode de fonctionnement distribué par rapport à la fonction d'application prédéterminée respective lorsqu'on détermine que le signal de disponibilité indique la non-disponibilité du centre de commande d'application respectif ; dans lequel
- le fonctionnement dans le mode de fonctionnement centralisé par rapport à la fonction d'application prédéterminée respective comprend la génération de premiers signaux de communication sans fil spécifiques de l'application permettant de communiquer par l'intermédiaire du centre de commande d'application respectif ; et
- le fonctionnement dans le mode de fonctionnement distribué par rapport à la fonction d'application prédéterminée respective comprend la génération de seconds signaux de communication sans fil spécifiques de l'application permettant de communiquer directement avec l'au moins un nœud de réseau cible et leur envoi direct à un ou plusieurs parmi l'au moins un nœud de réseau cible ;
dans lequel le nœud de réseau (100) comprend :
- une unité de stockage (312) pour :
∘ le stockage de données de réseau indiquant les nœuds de réseau du réseau de communication sans fil, les données de réseau comprenant une ou plusieurs entrées de centre de commande d'application se rapportant aux centres de commande d'application respectifs ; et
∘ le stockage de données de routage indiquant des routes de communication disponibles au sein du réseau de communication sans fil, les données de routage comprenant une ou plusieurs entrées de nœud de commande se rapportant à des routes de communication entre le nœud de réseau et le centre de commande d'application respectif ; le procédé étant **caractérisé en ce que**
- l'unité d'application (302) est connectée à l'unité de stockage et configurée pour fournir les premiers signaux de communication sans fil spécifiques de l'application en dépendance des données de réseau ; et
- une unité de commande de fonctionnement (306) du nœud de réseau (100) est configurée, dans le mode de fonctionnement distribué pour désactiver l'accès de l'unité d'application aux entrées de nœud de commande pendant un intervalle de temps prédéterminé.

13. Procédé (600) selon la revendication 12, dans lequel le procédé comprend en outre :
- lors du fonctionnement dans le mode de fonctionnement centralisé par rapport à la fonction d'application prédéterminée respective, la réception (602) en provenance des nœuds de réseau des premiers signaux de communication sans fil spécifiques de l'application en tant que signaux de communication sans fil entrants comprenant une charge utile indiquant une instruction de commande permettant de commander le fonctionnement d'un ou plusieurs nœuds de réseau cibles et la fourniture (604) de signaux de communication sans fil de sortie comprenant l'instruction de commande au ou aux nœuds de réseau cibles.

14. Programme d'ordinateur comprenant des instructions qui, lorsque le programme est exécuté par un ordinateur, amènent l'ordinateur à effectuer le procédé selon la revendication 12 ou 13.
